# EUROPÄISCHE PATENTSCHRIFT

(11) **EP 1 665 431 B1**
(45) Veröffentlichungstag und Bekanntmachung des Hinweises auf die Patenterteilung: **07.10.2015**
(21) Anmeldenummer: 04786204.0
(22) Anmeldetag: 24.08.2004
(51) Int. Cl.: H01M 8/02, H01M 8/12, H01M 8/24

(54) **INTERKONNEKTOR FÜR HOCHTEMPERATUR-BRENNSTOFFZELLENEINHEIT**
INTERCONNECTOR FOR HIGH-TEMPERATURE FUEL CELL UNIT
ELEMENT D'INTERCONNEXION POUR UNITE DE PILES A COMBUSTIBLE HAUTE TEMPERATURE

(30) Priorität: 08.09.2003 DE 10342690; 22.10.2003 DE 10350478
(43) Veröffentlichungstag der Anmeldung: 07.06.2006
(73) Patentinhaber: Fraunhofer-Gesellschaft zur Förderung der angewandten Forschung e.V., 80686 München (DE)
(72) Erfinder: KUSNEZOFF, Mihails, 01309 Dresden (DE); EICHLER, Klaus, 01187 Dresden (DE); OTSCHIK, Peter, 01728 Possendorf (DE)
(74) Vertreter: Pfenning, Meinig & Partner GbR
(86) Internationale Anmeldenummer: PCT/DE2004/001932
(87) Internationale Veröffentlichungsnummer: WO 2005/027247

(56) Entgegenhaltungen:
- EP-A- 0 722 193
- EP-A- 0 897 897
- DE-A- 4 343 914
- US-B1- 6 344 290

## Beschreibung

Die vorliegende Erfindung betrifft eine planare Brennstoffzelleneinheit, an der eine Kathoden-Elektrolyt-Anoden-Einheit (nachfolgend als KEA-Einheit bezeichnet), ein Gasverteiler-Element, Elemente für die innere Kontaktierung, Dichtungselemente und ein Interkonnektor vorhanden sind.

### Anwendungsgebiet

Die Erfindung findet Anwendung in der Energieumwandlung/ -speicherung mittels elektrochemischen Generatoren, insbesondere mittels Festelektrolyt-Brennstoffzellen und Elektrolysezellen für Betriebstemperaturen von 500 bis 1000 °C.

### Stand der Technik

Planare Brennstoffzelleneinheiten sind aus dem Stand der Technik bekannt. In der Regel werden mehrere solcher Brennstoffzelleneinheiten zu einem Stack zusammengefasst, in welchem die Brennstoffzelleneinheiten längs einer Stapelrichtung aufeinander folgen.

Im Betrieb der Brennstoffzelleneinheit laufen in den Elektroden der KEA-Einheit elektrochemische Reaktionen ab, wodurch in der Anode Elektronen frei werden. Die zwischen aufeinander folgenden KEA-Einheiten angeordneten Interkonnektorplatten dienen dem Elektronentransport von der Anode der einen Brennstoffzelleneinheit zur Kathode der benachbarten Brennstoffzelleneinheit. Von den randständigen Platten (Deckplatte und Grundplatte) wird der Elektronenstrom für einen externen Stromkreislauf abgegriffen.

Diese bekannten Brennstoffzelleneinheiten bestehen aus einer KEA-Einheit, der Interkonnektorplatte, Dichtungen und Kontaktierungselementen. Die bei den bekannten Brennstoffzelleneinheiten verwendeten Interkonnektorplatten sind aus Vollplatten erodierte oder gefräste metallische Teile, zwischen denen sich die KEA-Einheiten befinden, so dass die Interkonnektorplatten auch als Träger der KEA-Einheiten und der mechanischen Stabilisierung des Stacks dienen. Ferner sind diese Platten mit Kanälen versehen, die der Durchleitung der Betriebsmittel (Brenngas und Oxidant) für die KEA-Einheit dienen. Solche Stacks sind wegen der aufwendigen Interkonnektorhestellung kostenintensiv.

In DE 100 44 703 wurde vorgeschlagen, die Interkonnektorplatte als zweiteilige Schale aus einer Kontaktplatte und einem Fluidführungselement zu bilden, welche die Kathoden-Elektrolyt-Anoden-Einheit umschließt. Dabei werden die Kontaktplatte und das Fluidführungselement aus Blechmaterial hergestellt. Die Kontaktplatte soll in einem elektrisch leitenden Kontakt mit der Anode und der Kathode einer benachbarten Brennstoff zelleneinheit stehen. Dafür soll sie mit Kontaktelementen in Form von aneinander angrenzenden Vorsprüngen und Vertiefungen oder mit einer Wellenstruktur in einem Kontaktfeld, hergestellt durch Prägen, versehen werden. Um eine gasdichte und einfache Verbindung zwischen den Gehäuseteilen zu erreichen, wurde vorgesehen, diese durch eine bestimmte Formgebung und mittels Laserschweißen oder Elektronenstrahlschweißen zu verbinden (DE 101 35 336).

Die Herstellung der Kontaktelemente einer solchen Kontaktplatte ist mit einer erheblichen Verwerfung des Blechs verbunden, was die weitere Herstellung der Brennstoffzelleneinheit deutlich erschwert. Weiterhin ist der elektrische Kontaktwiderstand zwischen der Kontaktplatte und der Kathode der KEA-Einheit der benachbarten Brennstoffzelleneinheiten zu hoch und erhöht sich im Betrieb infolge Korrosion weiter. Ferner ist die mechanische Stabilität eines solchen Interkonnektors, der aus zwei dünnen Gehäuseblechteilen besteht, gering, so dass er sich bei der Betriebstemperatur aufgrund der entstehenden Spannungen verformen kann und so die mechanische Festigkeit reduziert und der elektrische Übergangswiderstand im Betrag erhöht wurde.

Außerdem ist aus US 6 344 290 B1 ein Brennstoffzellenstapel mit festem Elektrolyten und seine Anordnung bekannt. Dieser wird mit Trennplatten und Trägern gebildet, wobei ein Träger porös und für ein Gas durchlässig sein kann. Es können auch mehrere Kanäle ausgebildet sein.

Die DE 43 43 914 A1 betrifft eine Umschließungskonstruktion für Hochtemperaturbrennstoffzellen mit integrierter Wärmeauskopplungseinrichtung. Dabei werden ebene Platten eingesetzt um Einzelzellen und einen Brennstoffzellenstapel zu bilden.

In EP 1 187 243 A2 ist eine Brennstoffzelleneinheit mit einer Kathoden-Anoden-Elektrolyt-Einheit beschrieben, bei der eine Kontaktplatte mit der Kathoden-Anoden-Elektrolyt-Einheit elektrisch leitend in Verbindung steht. Außerdem ist ein Fluidführungselement vorhanden, das mit der Kontaktplatte fluiddicht verbunden ist, dabei eine Begrenzung eines im Betrieb der Brennstoffzelleneinheit von einem Fluid durchströmten Fluidraums bildet und als Blechformteil ausgebildet ist.

Der vorliegenden Erfindung liegt daher die Aufgabe zugrunde, Brennstoffzelleneinheiten zur Verfügung zu stellen, die aus einer KEA-Einheit, Gasverteilungs-Element, Elementen für innere Kontaktierung und einem Interkonnektor bestehen, die
- keine Ausbildung von Kontaktelementen unmittelbar an einem Blechformteil erfordert,
- einen geringen Kontaktwiderstand zwischen Interkonnektor und KEA-Einheit gewährleistet,
- Kurzschluss zwischen benachbarten Interkonnektoren vermeidet,
- eine gute Abdichtung der Gasräume voneinander erlaubt,
- eine Abdichtung des Oxidationsmittelraumes nach außen zulässt und
einen geringen Herstellungsaufwand erfordert.

### Wesen der Erfindung

Diese Aufgabe wird mit den Merkmalen des Anspruchs 1 gelöst. Vorteilhafte Ausgestaltungsformen und Weiterbildungen der Erfindungen können mit den in den untergeordneten Ansprüchen bezeichneten Merkmalen erreicht werden.

Die Brennstoffzelleneinheit hat ein KEA-Halterungselement, das als Blechformteil ohne zusätzliche Kontaktelemente ausgeführt ist. Das KEA-Halterungselement ist mit der Bodenplatte, die als Blechformteil ebenfalls ohne Kontaktelemente ausgeführt ist, gasdicht verbunden, wobei für eine mechanische Stabilisierung ein poröses Gasverteiler-Element zwischen dem KEA-Halterungselement und der Bodenplatte angeordnet ist.

Die Blechformteile können durch einen oder mehrere Umformvorgänge, insbesondere durch Prägen und/oder Tiefziehen, aus einem ebenen Blechzuschnitt hergestellt werden.

Das poröse Gasverteiler-Element kann als umgeformtes Drahtgeflecht, insbesondere durch Stanzen und Kaltumformen, hergestellt werden. Alternativ hierzu kann auch ein Cermet-Substrat oder ein poröser Metallpulververbund verwendet werden. Ein Metallpulververbund kann durch herkömmliche pulvermetallurgische Verfahren (Formgebung bei Raumtemperatur mit nachfolgendem Einbrand) hergestellt werden.

Am Gasverteiler-Element können auch Kanäle ausgebildet sein, die zur Reduzierung des Strömungswiderstandes beim Durchtritt der Gase führen. Sie können ebenfalls durch Verformung, beispielsweise durch Pressen ausgebildet werden. Solche Kanäle sollten eine Tiefe zwischen 0,2 und 3 mm, bevorzugt zwischen 0,5 bis 0,8 mm aufweisen. Dabei kann die Gesamtdicke eines Gasverteiler-Elementes im Bereich zwischen 0,5 und 5 mm liegen.

Das KEA-Halterungselement und die Bodenplatte bilden Schalen eines Gehäuses für das poröse Gasverteiler-Element, das auch einen elektrischen Kontakt zur Anode der KEA-Einheit hat. Es kann auch eine zusätzliche Kontaktschicht auf das Gasverteiler-Element aufgetragen werden, um den elektrischen Kontaktwiderstand zur Anode zu verringern. Vorteilhaft ist das Gasverteiler-Element an der Bodenplatte oder dem KEA-Halterungselement insbesondere mittels Punktschweißen oder Laserschweißen, Elektronenschweißen bzw. Löten zu befestigen. Das Gasverteiler-Element dient gleichzeitig als Abstandshalter zwischen KEA-Halterungselement und Bodenplatte.

Für eine bevorzugte Ausgestaltung der Erfindung ist vorgesehen, dass das KEA-Halterungselement und die Bodenplatte mindestens eine Öffnung für die Gaszufuhr in das Gasverteiler-Element und eine Öffnung für die Gasabfuhr aus dem Gasverteiler-Element hat. Das in das Gasverteiler-Element zugeführte und abgeführte Betriebsmittel kann ein Oxidationsmittel oder vorzugsweise ein Brenngas sein.

Um eine zuverlässige und gasdichte Verbindung zwischen KEA-Halterungselement und der Bodenplatte zu realisieren, ist vorgesehen, dass diese Teile durch Verschweißung, vorzugsweise durch Laserschweißung, miteinander verbunden werden. Ergänzend hierzu kann vorgesehen werden, dass die beiden Teile durch Lötung oder gasdichte Klebung, vorzugsweise mit einem Glaslot, miteinander verbunden werden. Ferner kann vorgesehen sein, dass das KEA-Halterungselement und die Bodenplatte durch eine Umbördelung ineinander gesteckt werden können und danach stoffschlüssig durch Schweißung, Verklebung oder Lötung gasdicht verbunden werden.

Um eine aufwendige Strukturierung der Bodenplatte zu vermeiden, ist erfindungsgemäß vorgesehen, Stege aus einem elektrisch leitenden Material auf die Außenseite der Bodenplatte aufzutragen oder dort auszubilden. Vorzugsweise haben die Stege eine Dicke von bis zu 1.5 mm. Die Stege dienen der gleichmäßigen Gasverteilung über die KEA-Elektrodenoberfläche und der Kontaktierung der Bodenplatte zu einer KEA-Elektrode, vorzugsweise der Kathode.

Die gasdichte Verbindung der KEA-Einheit mit dem KEA-Halterungselement kann durch eine Dichtung, die vorzugsweise am Rand der KEA-Einheit aufgebracht ist, realisiert werden. Ergänzend hierzu kann vorgesehen sein, dass die Dichtung zwischen der KEA-Einheit und dem KEA-Halterungselement als eine Beschichtung auf KEA-Halterungselement und/oder an der KEA-Einheit ausgebildet ist. Eine solche Beschichtung kann beispielsweise im Siebdruckverfahren, Dispenserverfahren, durch Walzenbeschichtung oder Nasspulverspritzen aufgebracht werden. Zur Abdichtung kommen insbesondere anorganische und keramische Werkstoffe in Betracht, die bei einer Betriebstemperatur von bis zu 950°C chemisch beständig, gasdicht einbrennbar und elektrisch isolierend sind. Vorzugsweise sollte ein Dichtmaterial gewählt werden, dessen thermischer Ausdehnungskoeffizient mit dem der KEA-Einheit kompatibel ist. Als Dichtmedium kann beispielsweise ein Glaslot mit kristallisierendem Glas verwendet werden, das nach der Kristallisation einen Ausdehnungskoeffizienten nahe dem des Elektrolyten der KEA-Einheit hat. Ein solches Glaslot ist aus EP 0 897 897 A1 bekannt.

Der Stack besteht aus einer Mehrzahl von erfindungsgemäßen Brennstoffzelleneinheiten, die längs einer Stapelrichtung in Reihe aufeinander folgen. Um eine zuverlässige, gasdichte und elektrisch isolierende Verbindung zwischen den aufeinander folgenden Gasöffnungen der Brennstoffzelleneinheiten zu realisieren, kommen gleiche Dichtmaterialien in Betracht, wie die, die für die Realisierung der Abdichtung zwischen KEA-Einheit und KEA-Halterungselement beschrieben sind.

Bei einer bevorzugten Ausgestaltung sollte ein leicht deformierbares elektrisch isolierendes Material, insbesondere Al₂O₃-Vlies, für die Abdichtung des Raumes zwischen den Brennstoffzelleneinheiten nach Außen verwendet werden.

Um dem Stack in einfacher Weise ein Betriebsmittel (Brenngas oder Oxidationsmittel) zu- und abführen zu können, ist vorteilhafterweise vorgesehen, dass mindestens eine der randständigen Platten (Deckplatte und Grundplatte) mindestens eine Gasdurchgangsöffnung aufweist. Ferner besitzen die Deckplatte und die Grundplatte ein Interface für die Systemanbindung des Stacks.

Zum Herstellen eines Stacks, der eine Mehrzahl erfindungsgemäßer Brennstoffzelleneinheiten umfasst, eignet sich ein Verfahren, das die folgenden Verfahrensschritte umfasst:
- Montage des Interkonnektors aus KEA-Halterungselement, Gasverteiler-Element und Bodenplatte;
- gasdichtes Verbinden von KEA-Halterungselement und Bodenplatte;
- Ausbildung der Stege auf der Bodenplatte;
- Montage der Dichtungselemente auf KEA-Halterungselement und/oder Bodenplatte;
- Anordnen der KEA-Einheit.
- anschließende Montage des Stacks durch anordnen von Brennstoffzelleneinheiten längs einer Stapelrichtung und Fixieren der Brennstoffzelleneinheiten in ihrer Lage relativ zueinander;
- Verspannen des Brennstoffzellenstapels, vorzugsweise durch eine Gewichtsbelastung sowie
- Verdichten der Dichtungselemente und nachfolgender Dichtheitstest.

Dabei zeigen:
- Figur 1: eine schematische Längsschnittdarstellung durch ein Beispiel einer erfindungsgemäßen Brennstoff zelleneinheit;
- Figur 2: in schematischer Form eine Querschnittsdarstellung von Figur 1;
- Figur 3: eine anodenseitige Draufsicht auf ein KEA-Halterungselement;
- Figur 4: eine Draufsicht auf eine Bodenplatte und
- Figur 5: eine schematische Schnittdarstellung eines Stapels von Brennstoffzelleneinheiten.

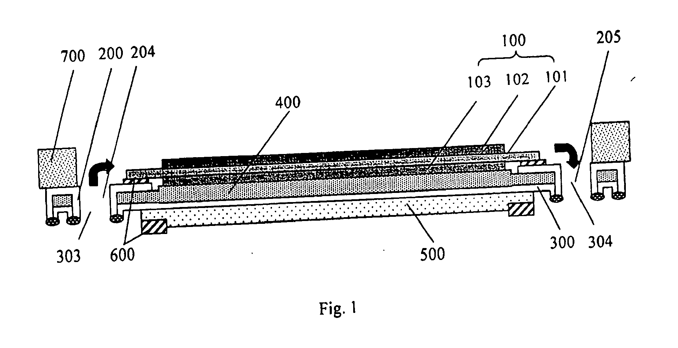

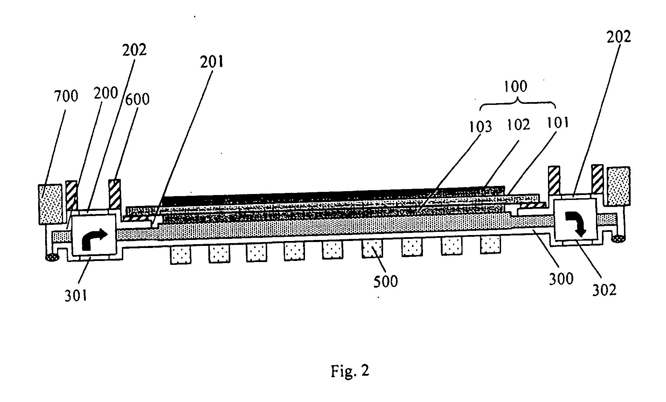

In Figur 1 ist ein schematischer Längsschnitt und in Figur 2 ein schematischer Querschnitt einer Brennstoffzelleneinheit mit einer KEA-Einheit (100), bestehend aus einem Elektrolyt (101), einer Anode (102) und einer Kathode (103), einem KAE-Halterungselement (200), bestehend aus einem Formblech mit Durchbruch für die Anode (102) und Öffnungen für eine Brenngaszufuhr (202) und Brenngasabfuhr (203) sowie Öffnungen für Luftzufuhr (204) und Luftabfuhr (205), einer Bodenplatte (300), bestehend aus einem Formblech mit Öffnungen für Brenngaszufuhr (301) und Brenngasabfuhr (302) sowie Öffnungen für Luftzufuhr (303) und Luftabfuhr (304), einem Gasverteiler-Element (400), bestehend aus einem vorgepressten Drahtgeflecht oder Blech und Stegen (500) auf einer Bodenplattenoberfläche, bestehend aus einem elektrisch leitfähigen Werkstoff, gezeigt.

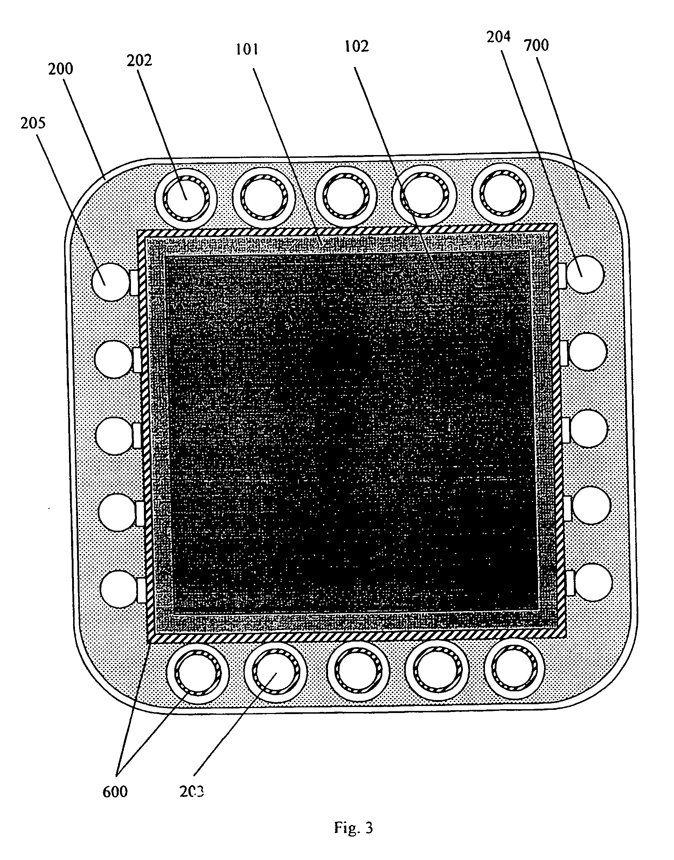

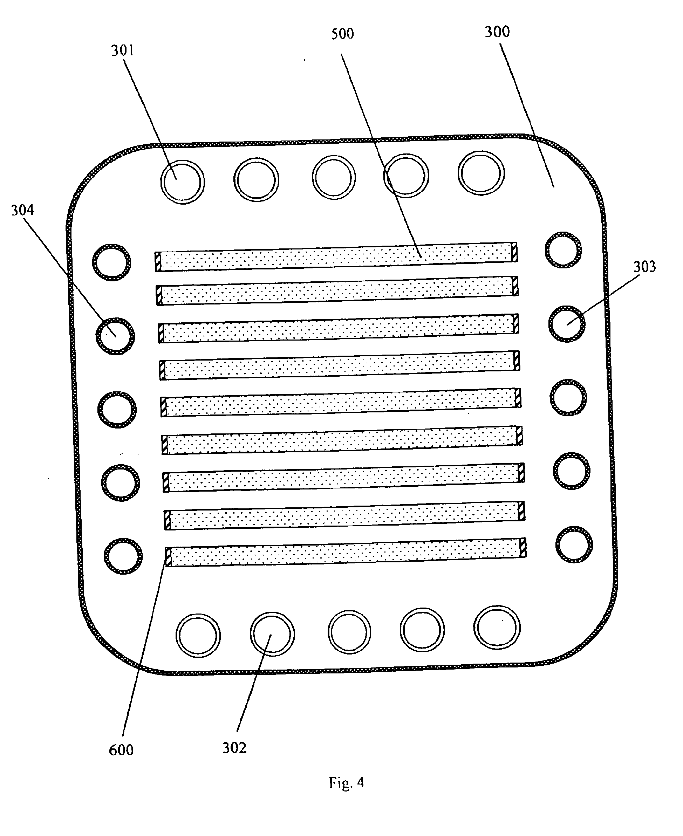

Die Draufsicht auf ein KEA-Halterungselement 200 und auf eine Bodenplatte 300 ist in den Figuren 3 und 4 schematisch dargestellt.

An der KEA-Einheit 100 ist ein gasdichter Elektrolyt 101, bevorzugt ein Sauerstoffionenleiter, beispielsweise aus Yttrium-stabilisiertem Zirkonoxid vorhanden. Auf dem Elektrolyt 101 befindet sich eine plattenförmige Kathode 103, die aus einem elektrisch leitfähigen und elektrokatalytisch aktiven Werkstoff, beispielsweise aus (La, Sr)MnO₃, gebildet ist und eine offene Porosität aufweist, um einem Oxidationsmittel, beispielsweise Luft, aus dem an der Kathode 103 angrenzenden Oxidationsmittelraum den Durchtritt zum Elektrolyten 101 zu ermöglichen. An der KEA-Einheit 100 ist eine plattenförmige Anode 102 aus einem elektrisch leitfähigen und elektrokatalytisch aktiven Werkstoff, wie beispielsweise Ni-ZrO₂-Cermet, das porös ist, um dem Brenngas aus dem Brenngasraum den Durchtritt durch die Anode 102 zum Elektrolyten 101 zu ermöglichen, vorhanden.

Am elektrodenfreien Rand ist die KEA-Einheit 100 mittels Dichtmaterial 600, beispielsweise einem Glaslot, mit dem KEA-Halterungselement 200 im Wesentlichen gasdicht verbunden, so dass das Oxidationsmittel aus dem Kathodenraum nicht in unmittelbarem Kontakt mit dem Brenngas aus dem Brenngasraum kommen kann.

Im Betrieb weist die KEA-Einheit 100 eine Temperatur von beispielsweise 850°C auf, bei welcher der Elektrolyt 101 einen geringen Innenwiderstand für Sauerstoffionentransport hat. Das Brenngas aus dem Brenngasraum wird durch die Sauerstoffionen aus dem Elektrolyten 101 oxidiert und gibt dabei die Elektronen an die Anode 102 ab. Die Elektronen werden über das Gasverteiler-Element 400 in die Bodenplatte 300 übergeleitet und weiter durch die Stege 500 der Kathode 103 der nächsten Brennstoffzelleneinheit für die Bildung der Sauerstoffionen aus dem Oxidationsmittel zugeführt.

Das KEA-Halterungselement 200 und die Bodenplatte 300 bilden eine zweiteilige Schale um das Gasverteiler-Element 400. Sie bestehen aus einem elektrisch gut leitenden Metallblechformteil, bevorzugt aus einem Edelstahlblech mit einer Dicke von bis zu 1 mm, das
- bei Temperaturen von bis zu 950°C chemisch beständig an Luft und im Brenngas ist,
- einen thermischen Ausdehnungskoeffizienten nahe dem der KEA-Einheit 100 hat,
- an Luft eine gut leitende Oxidschicht ausbildet,
- möglichst an Luft schweißbar ist.

Durch eine Umbördelung am Blechrand und in den Oxidationsmittel-Öffnungen können das KEA-Halterungselement 200 und die Bodenplatte 300 ineinander gesteckt werden und dadurch das Gasverteiler-Element 400, wie ein Gehäuse einschließen. Die Umbördelung wird zur Abdichtung gegenüber dem Außenraum abgedichtet, vorzugsweise mit dem Laser verschweißt.

Das Gasverteiler-Element 400 stellt ein poröses Drahtgeflecht mit Öffnungen für die Brenngaszufuhr und - abfuhr aus einem Edelstahldraht dar, das der gleichmäßigen Verteilung von Brenngas über die Anode 102 der KEA-Einheit 100 im Brenngasraum dient. Es besteht aus einem elektrisch gut leitenden Draht, bevorzugt aus einem Draht mit einem Durchmesser von bis zu 0.5 mm, der
- bei den auftretenden Temperaturen von bis zu 950°C im Brenngas chemisch beständig ist,
- einen thermischen Ausdehnungskoeffizienten nahe dem des Edelstahlbleches hat.

Das Drahtgeflecht wird vorzugsweise so vorgepresst, dass in der Mitte eine nicht verformte bzw. weniger verformte Zone verbleibt, die der Kontaktierung des Drahtgeflechts zur Anode 102 der KEA-Einheit 100 dient. Ferner trägt diese nicht verformte Zone dazu bei, den Brenngasdurchfluss, aufgrund der geringeren Strömungsverluste, im Wesentlichen unter die Anodenfläche zu leiten. In der bevorzugten Ausführung kann auf diese Zone eine zusätzliche Kontaktschicht durch Walzenbeschichtung aufgebracht werden.

Um die Kontaktierung der Anode einer Brennstoffzelleneinheit mit der Kathode 103 der benachbarten Brennstoffzelleneinheit erfindungsgemäß ohne eine Strukturierung eines Kontaktfeldes der Bodenplatte 300 zu erreichen, werden die Stege 500 auf die Bodenplatte 300 mittels Dispenserverfahren oder Maskendruck bzw. Siebdruck aufgetragen und getrocknet. Alternativ hierzu kann auf die Bodenplatte 300 eine grüne Folie auflaminiert und nachträglich strukturiert werden. Ferner dienen die Stege einer gleichmäßigen Gasverteilung über die Kathode 103 der KEA-Einheit 100. Vorteilhaft können die Stege 500 aus einer elektrisch leitenden Keramik ausgebildet werden, wobei Keramiken ausgewählt aus der Gruppe der Perowskite noch zu bevorzugen sind.

Der Stack besteht aus einer Vielzahl (mindestens 2) der beschriebenen Brennstoffzelleneinheiten, die längs einer Stapelrichtung aufeinander folgen.

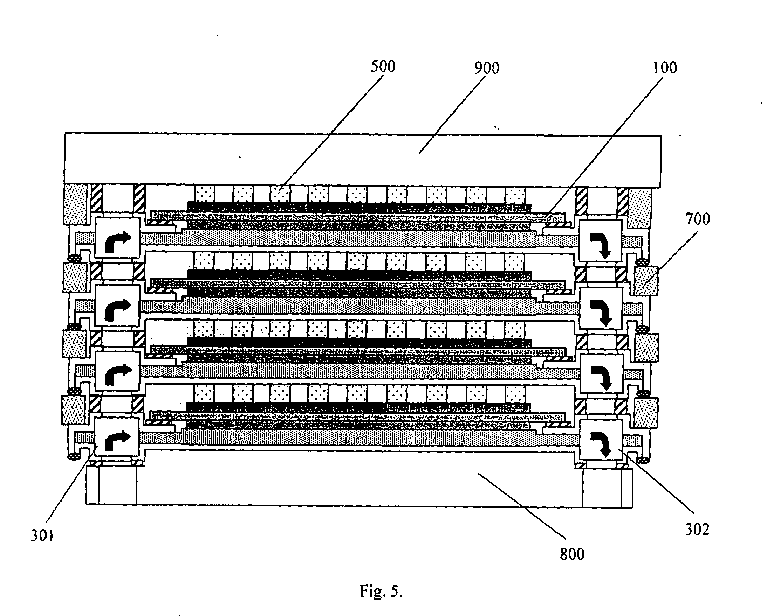

Ein Beispiel mit vier Brennstoffzelleneinheiten ist in Figur 5 gezeigt. Er fängt mit einer Grundplatte 800 an und endet mit einer Deckplatte 900, an der ebenfalls Stege 500 vorhanden sind. Um eine zuverlässige, gasdichte und elektrisch isolierende Verbindung zwischen den aufeinander folgenden Gasöffnungen der Brennstoffzelleneinheiten zu realisieren, werden Dichtmaterialien auf der Basis eines Glaslotes eingesetzt. Bei einer bevorzugten Ausgestaltung des Stacks wird um die Gasöffnungen im KEA-Halterungselement 200 und in der Bodenplatte 300 ein Dichtungsflansch für das Auflegen bzw. Auftragen der Dichtungen durch Prägetechnik realisiert. Ferner wird dadurch auch die Dicke der Dichtung reduziert, was für eine gasdichte Verbindung von Vorteil ist. Wird die Dichtung aus Glaslot gebildet, so kann sie durch Auftragen einer Glaspulver enthaltenden Paste hergestellt werden. Beim Erreichen der Betriebstemperatur des Brennstoffzellenstapels (Stack) wird der Glaslot weich und füllt die Poren in der Ausgangsmasse. Nach einer Wärmebehandlung kristallisiert das Glas. Die dabei entstehende Glaskeramik hat einen thermischen Ausdehnungskoeffizienten nahe dem der KEA-Einheit 100. Bei einer bevorzugten Ausgestaltung des Stacks ist es vorgesehen ein leicht deformierbares, elektrisch isolierendes Material 700, vorzugsweise Al₂O₃-Vlies, für die Abdichtung des Raumes zwischen den Brennstoffzelleneinheiten nach außen zu verwenden.

## Patentansprüche

1. Brennstoffzelleneinheit mit einer KEA als Kathode-Elektrolyt-Anode-Einheit (100), bei der ein Interkonnektor aus einem KEA-Halterungselement (200), einer Bodenplatte (300) und einem porösen Gasverteiler-Element (400) gebildet ist, dabei das KEA-Halterungselement (200) und die Bodenplatte (300) als Blechteile als zwei Schalen ein Gehäuse bilden, dabei das Gasverteiler-Element (400) gegenüber dem Außenraum gasdicht umschließen und
die Bodenplatte (300) und das KEA-Halterungselement (200) mit mindestens einer Öffnung für die Betriebsmittelzufuhr (202, 204, 301, 303) und mindestens einer Öffnung für die Betriebsmittelabfuhr (203, 205, 302, 304) versehen sind, **dadurch gekennzeichnet, dass**
auf einer äußeren Oberfläche der Bodenplatte (300) Stege (500) aus einem elektrisch leitfähigen Werkstoff aufgetragen/ausgebildet sind.

2. Brennstoffzelleneinheit nach Anspruch 1, **dadurch gekennzeichnet, dass** die Stege (500) eine Dicke von maximal 1.5 mm aufweisen.

3. Brennstoffzelleneinheit nach Anspruch 1 oder 2, **dadurch gekennzeichnet, dass** das KEA-Halterungselement (200) als Blechformteil ausgebildet ist.

4. Brennstoffzelleneinheit nach einem der Ansprüche 1 bis 3, **dadurch gekennzeichnet, dass** die Bodenplatte (300) als Blechformteil ausgebildet ist.

5. Brennstoffzelleneinheit nach einem der Ansprüche 1 bis 4, **dadurch gekennzeichnet, dass** die Bodenplatte (300) und KEA-Halterungselement (200) durch Umbördelung miteinander verbunden sind.

6. Brennstoffzelleneinheit nach einem der Ansprüche 1 bis 5, **dadurch gekennzeichnet, dass** die Bodenplatte (300) und KEA-Halterungselement (200) mittels einer gasdichten Klebverbindung miteinander verbunden sind.

7. Brennstoffzelleneinheit nach einem der Ansprüche 1 bis 6, **dadurch gekennzeichnet, dass** das Gasverteiler-Element (400) aus einem vorgepressten Metalldrahtgeflecht hergestellt ist.

8. Brennstoffzelleneinheit nach einem der Ansprüche 1 bis 6, **dadurch gekennzeichnet, dass** das Gasverteiler-Element (400) aus einem vorgepressten Metallpulververbund hergestellt ist.

9. Brennstoffzelleneinheit nach Anspruch 7 oder 8, **dadurch gekennzeichnet, dass** am Gasverteiler-Element (400) Kanäle ausgebildet sind.

10. Brennstoffzelleneinheit nach Anspruch 9, **dadurch gekennzeichnet, dass** die Kanäle eine Tiefe von 0,2 bis 3 mm am Gasverteiler-Element (400) aufweisen.

11. Brennstoffzelleneinheit nach einem der Ansprüche 1 bis 10, **dadurch gekennzeichnet, dass** die KEA-Einheit (100) über eine elektrisch isolierende gasdichte Dichtung (600) auf dem KEA-Halterungselement (200) aufliegt.

12. Brennstoffzelleneinheit nach Anspruch 11, **dadurch gekennzeichnet, dass** die Dichtung (600) aus einem Glaslot besteht.

13. Brennstoffzelleneinheit nach einem der Ansprüche 1 bis 12, **dadurch gekennzeichnet, dass** der Oxidationsraum der Brennstoffzelle durch eine elektrisch isolierende Abdichtung von der Umgebung getrennt ist, welche an die Bodenplatte (300) der benachbarten Brennstoffzelleneinheit grenzt.

14. Brennstoffzelleneinheit nach einem der Ansprüche 1 bis 13, **dadurch gekennzeichnet, dass** die Brennstoffzelleneinheit eine Gasöffnungsdichtung hat, die an das KEA-Halterungselement (200) und an der Bodenplatte (300) anliegt und die Gasöffnungen nach außen gasdicht abschließt.

15. Brennstoffzelleneinheit nach Anspruch 14, **dadurch gekennzeichnet, dass** die GasöffnungsDichtung ein kristallisierendes Glaslot ist.

16. Brennstoffzelleneinheit nach Anspruch 14, **dadurch gekennzeichnet, dass** die GasöffnungsDichtung mindestens zwei separate Dichtungselemente hat.

17. Brennstoffzelleneinheit nach einem der Ansprüche 1 bis 16, **dadurch gekennzeichnet, dass** am mit einem vorgepressten Drahtgeflecht gebildeten Gasverteiler-Element (400) in der Mitte eine nicht oder weniger verformte Zone vorhanden ist.

18. Brennstoffzelleneinheit nach Anspruch 17, **dadurch gekennzeichnet, dass** das Gasverteiler-Element (400) im Bereich der Anode (102) weniger oder nicht verformt ist.

19. Brennstoffzelleneinheit nach einem der Ansprüche 1 bis 18, **dadurch gekennzeichnet, dass** am Gasverteiler-Element (400) im Bereich der Anode (102) eine Kontaktschicht aufgebracht ist.

## Claims

1. Fuel cell unit having a CEA as cathode-electrolyte-anode unit (100), in which an interconnector comprising a CEA mounting element (200), a base plate (300) and a porous gas distributor element (400) is formed, the CEA mounting element (200) and the base plate (300) forming, as sheet metal parts as two shells, a housing surrounding the gas distributor element (400) in a gas-tight manner relative to the exterior, and
the base plate (300) and the CEA mounting element (200) being provided with at least one opening for the operating material supply (202, 204, 301, 303) and at least one opening for the operating material discharge (203, 205, 302, 304), **characterised in that**
webs (500) made of an electrically conductive material are applied to/formed on an outer surface of the base plate (300).

2. Fuel cell unit according to claim 1, **characterised in that** the webs (500) have a thickness of at most 1.5 mm.

3. Fuel cell unit according to claim 1 or 2, **characterised in that** the CEA mounting element (200) is configured as a sheet metal shaped part.

4. Fuel cell unit according to one of claims 1 to 3, **characterised in that** the base plate (300) is configured as a sheet metal shaped part.

5. Fuel cell unit according to one of claims 1 to 4, **characterised in that** base plate (300) and CEA mounting element (200) are connected to each other by beading.

6. Fuel cell unit according to one of claims 1 to 5, **characterised in that** the base plate (300) and CEA mounting element (200) are connected to each other by means of a gas-tight adhesive bond.

7. Fuel cell unit according to one of claims 1 to 6, **characterised in that** the gas distributor element (400) is produced from a pre-compressed metal wire mesh.

8. Fuel cell unit according to one of claims 1 to 6, **characterised in that** the gas distributor element (400) is produced from a pre-compressed metal powder composite.

9. Fuel cell unit according to claim 7 or 8, **characterised in that** channels are formed on the gas distributor element (400).

10. Fuel cell unit according to claim 9, **characterised in that** the channels have a depth of 0.2 to 3 mm on the gas distributor element (400).

11. Fuel cell unit according to one of claims 1 to 10, **characterised in that** the CEA unit (100) lies on the CEA mounting element (200) via an electrically insulating gas-tight seal (600).

12. Fuel cell unit according to claim 11, **characterised in that** the seal (600) is composed of a glass solder.

13. Fuel cell unit according to one of claims 1 to 12, **characterised in that** the oxidation chamber of the fuel cell is separated from the environment by an electrically insulating seal which borders on the base plate (300) of the adjacent fuel cell unit.

14. Fuel cell unit according to one of claims 1 to 13, **characterised in that** the fuel cell unit has a gas opening seal which abuts on the CEA mounting element (200) and on the base plate (300) and seals the gas openings to the outside in a gas-tight manner.

15. Fuel cell unit according to claim 14, **characterised in that** the gas opening seal is a crystallising glass solder.

16. Fuel cell unit according to claim 14, **characterised in that** the gas opening seal has at least two separate seal elements.

17. Fuel cell unit according to one of claims 1 to 16, **characterised in that** a non-deformed or less deformed zone is present in the middle on the gas distributor element (400) formed with a pre-compressed wire mesh.

18. Fuel cell unit according to claim 17, **characterised in that** the gas distributor element (400) is less deformed or not deformed in the region of the anode (102).

19. Fuel cell unit according to one of claims 1 to 18, **characterised in that** a contact layer is applied to the gas distributor element (400) in the region of the anode (102).

## Revendications

1. Unité de piles à combustible comportant une unité cathode-électrolyte-anode (100), dite unité CEA, dans laquelle un interconnecteur est constitué d'un élément de support (200) de l'unité CEA, d'une plaque de fond (300) et d'un élément de distribution de gaz (400) poreux, en outre, l'élément de support (200) de l'unité CEA et la plaque de fond (300) sous forme de tôles en forme de deux coques forment un carter, entourent de manière étanche aux gaz l'élément de distribution de gaz (400) par rapport à l'espace extérieur, et
la plaque de fond (300) et l'élément de support (200) de l'unité CEA sont munies d'au moins une ouverture pour l'admission du combustible (202, 204, 301, 303) et d'au moins une ouverture pour l'évacuation du combustible (203, 205, 302, 304), **caractérisée en ce que**
des nervures (500) en matériau électroconducteur sont posées ou réalisées sur une surface extérieure de la plaque de fond (300).

2. Unité de piles à combustible selon la revendication 1, **caractérisée en ce que** les nervures (500) ont une épaisseur de 1,5 mm maximum.

3. Unité de piles à combustible selon la revendication 1 ou 2, **caractérisée en ce que** l'élément de support (200) de l'unité CEA est réalisé sous la forme d'une pièce façonnée en tôle.

4. Unité de piles à combustible selon l'une quelconque des revendications 1 à 3, **caractérisée en ce que** la plaque de fond (300) est réalisée sous la forme d'une pièce façonnée en tôle.

5. Unité de piles à combustible selon l'une quelconque des revendications 1 à 4, **caractérisée en ce que** la plaque de fond (300) et l'élément de support (200) de l'unité CEA sont reliés l'un à l'autre par rabattement du bord.

6. Unité de piles à combustible selon l'une quelconque des revendications 1 à 5, **caractérisée en ce que** la plaque de fond (300) et l'élément de support (200) de l'unité CEA sont reliés l'un à l'autre par un assemblage collé étanche aux gaz.

7. Unité de piles à combustible selon l'une quelconque des revendications 1 à 6, **caractérisée en ce que** l'élément de distribution de gaz (400) est réalisé dans un treillis de fil métallique préformé.

8. Unité de piles à combustible selon l'une quelconque des revendications 1 à 6, **caractérisée en ce que** l'élément de distribution de gaz (400) est réalisé dans un composite de poudre métallique préformé.

9. Unité de piles à combustible selon la revendication 7 ou 8, **caractérisée en ce que** des canaux sont réalisés sur l'élément de distribution de gaz (400).

10. Unité de piles à combustible selon la revendication 9, **caractérisée en ce que** lesdits canaux sur l'élément de distribution de gaz (400) ont une profondeur de 0,2 à 3 mm.

11. Unité de piles à combustible selon l'une quelconque des revendications 1 à 10, **caractérisée en ce que** l'unité CEA (100) repose sur l'élément de support (200) par l'intermédiaire d'un joint d'étanchéité (600) étanche aux gaz et électro-isolante.

12. Unité de piles à combustible selon la revendication 11, **caractérisée en ce que** le joint d'étanchéité (600) est une brasure en verre.

13. Unité de piles à combustible selon l'une quelconque des revendications 1 à 12, **caractérisée en ce que** la chambre d'oxydation de la pile à combustible est séparée de l'environnement par le joint d'étanchéité électro-isolante, qui jouxte la plaque de fond (300) de l'unité de piles à combustible adjacente.

14. Unité de piles à combustible selon l'une quelconque des revendications 1 à 13, **caractérisée en ce que** l'unité de piles à combustible possède un joint d'étanchéité pour ouvertures de gaz, lequel est en appui sur l'élément de support (200) de l'unité CEA et sur la plaque de fond (300) et obture les ouvertures de gaz de manière étanche aux gaz vers l'extérieur.

15. Unité de piles à combustible selon la revendication 14, **caractérisée en ce que** le joint d'étanchéité pour ouvertures de gaz est une brasure en verre cristallisante.

16. Unité de piles à combustible selon la revendication 14, **caractérisée en ce que** le joint d'étanchéité pour ouvertures de gaz comporte au moins deux éléments d'étanchéité séparés.

17. Unité de piles à combustible selon l'une quelconque des revendications 1 à 16, **caractérisée en ce qu'**une zone non déformée ou moins déformée est présente au milieu sur l'élément de distribution de gaz (400) formé par un treillis métallique préformé.

18. Unité de piles à combustible selon la revendication 17, **caractérisée en ce que** l'élément de distribution de gaz (400) est moins déformé ou n'est pas déformé dans la zone de l'anode (102).

19. Unité de piles à combustible selon l'une quelconque des revendications 1 à 18, **caractérisée en ce qu'**une couche de contact est déposée sur l'élément de distribution de gaz (400) dans la zone de l'anode (102).
